(19)

**Europäisches Patentamt**
**European Patent Office**
**Office européen des brevets**

(11) **EP 4 412 111 A1**

(12) **EUROPEAN PATENT APPLICATION**
published in accordance with Art. 153(4) EPC

(43) Date of publication:
**07.08.2024 Bulletin 2024/32**

(21) Application number: **21959515.4**

(22) Date of filing: **29.09.2021**

(51) International Patent Classification (IPC):
**H04B 10/70** (2013.01)      **H04B 10/079** (2013.01)
**H04L 9/08** (2006.01)

(52) Cooperative Patent Classification (CPC):
**H04B 10/079; H04B 10/70; H04L 9/08**

(86) International application number:
**PCT/KR2021/013351**

(87) International publication number:
**WO 2023/054744 (06.04.2023 Gazette 2023/14)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **LG Electronics Inc.**
**Yeongdeungpo-gu**
**Seoul 07336 (KR)**

(72) Inventors:
• **AHN, Byungkyu**
  **Seoul 06772 (KR)**
• **LEE, Sangrim**
  **Seoul 06772 (KR)**
• **LEE, Hojae**
  **Seoul 06772 (KR)**

(74) Representative: **Mooser, Sebastian Thomas**
**Wuesthoff & Wuesthoff**
**Patentanwälte und Rechtsanwalt PartG mbB**
**Schweigerstraße 2**
**81541 München (DE)**

(54) **METHOD AND DEVICE FOR LOW-COMPLEXITY QUANTUM DIRECT COMMUNICATION USING TWO-PHOTON INTERFERENCE**

(57)     The present disclosure relates to a quantum communication system, and specifically to a method and a device for the method, wherein the method comprises the steps of: acquiring configuration information about a quantum signal used for quantum communication; receiving, through a quantum channel, a first block sequence which includes a plurality of first single photons that correspond to the quantum signal, and generating a plurality of second single photons on the basis of the configuration information; inputting, to a beam splitter (BS), the first and second single photons which correspond to each other; and determining whether there is an error in the quantum channel on the basis of the number of detection paths of photons output from the beam splitter.

FIG. 6

EP 4 412 111 A1

## Description

### TECHNICAL FIELD

The present disclosure relates to a quantum communication system, and more particular, to method and device for quantum direct communication

### BACKGROUND

The essence of communication theory is to provide a method of transmitting information between two parties while preventing a third party from obtaining the information. For instance, in the field of electronic financial transactions, maintaining confidentiality between the two parties during the communication process is crucial. Typically, the two parties intending to exchange messages are commonly referred to as Alice and Bob, while an eavesdropper attempting to access the messages without authorization is known as Eve.

Many techniques have been developed to address security issues in communication. Some of the techniques rely on the computational limits of Eve, preventing Eve from performing specific mathematical operations within a reasonable amount of time. For example, the security of Rivest-Shamir-Adleman (RSA) public-key encryption heavily relies on the computational difficulty of factoring very large integers. Such techniques are known as "conditionally secure" or "computationally secure" schemes. However, in these techniques, since security reliability depends on the mathematical results from complexity theory, the security reliability may be impacted by the development of future mathematical tools.

To address such issues, communication based on quantum key distribution has been introduced. The communication based on quantum key distribution is based on the fundamental principles of quantum mechanics, thereby providing perfect security regardless of the computational capabilities of eavesdroppers. However, the quantum key distribution technique has challenges in terms of managing and storing a larger amount of key information as the length of secret key information increases and the number of users grows. To address this issue, quantum secure direct communication has been proposed, which allows for direct transmission of quantum information over a quantum channel without the use of secret key information. In this method, a classical message intended for transmission is included in the quantum information over a quantum channel. Furthermore, the security of transmitted information may be guaranteed based on the quantum mechanical property of non-replicability, similar to the quantum key distribution technique. However, as the dimension of quantum information increases, the complexity of quantum information transmission and reception may become excessively high.

## DISCLOSURE

### TECHNICAL PROBLEM

The present disclosure aims to provide a method and device for efficiently performing a process for transmitting and receiving quantum information (e.g., high-dimensional quantum information) in terms of complexity.

It will be appreciated by persons skilled in the art that the objects that could be achieved with the present disclosure are not limited to what has been particularly described hereinabove and the above and other objects that the present disclosure could achieve will be more clearly understood from the following detailed description.

### TECHNICAL SOLUTION

In a first aspect of the present disclosure, provided herein is a method used by a communication device in a quantum communication system. The method may include: obtaining configuration information regarding a quantum signal used in quantum communication; receiving a first block sequence over a quantum channel, wherein the first block sequence includes a plurality of first single photons related to the quantum signal; generating a plurality of second single photons based on the configuration information; inputting first and second single photons related to each other into a beam splitter (BS); and determining errors in the quantum channel based on a number of detection paths of a photon output from the BS.

In a second aspect of the present disclosure, provided herein is a communication device used in a quantum communication system. The communication device may include: at least one transceiver; at least one processor; and at least one computer memory operably connected to the at least one processor and configured to, when executed, cause the at least one processor to perform operations. The operations may include: obtaining configuration information regarding a quantum signal used in quantum communication; receiving a first block sequence over a quantum channel, wherein the first block sequence includes a plurality of first single photons related to the quantum signal; generating a plurality of second single photons based on the configuration information; inputting first and second single photons related to each other into a BS; and determining errors in the quantum channel based on a number of detection paths of a photon output from the BS.

In a third aspect of the present disclosure, provided herein is an apparatus for a quantum communication device. The apparatus may include: at least one processor; and at least one computer memory operably connected to the at least one processor and configured to, when executed, cause the at least one processor to perform operations. The operations may include: obtaining configuration information regarding a quantum signal used in quantum communication; receiving a first block sequence over a quantum channel, wherein the first block sequence includes a plurality of first single photons related to the quantum signal; generating a plurality of second single photons based on the configuration information; inputting first and second single photons related to each other into a BS; and determining errors in the quantum channel based on a number of detection paths of a photon output from the BS.

In a fourth aspect of the present disclosure, provided herein is a computer-readable storage medium including at least one computer program that, when executed, causes the at least one processor to perform operations. The operations may include: obtaining configuration information regarding a quantum signal used in quantum communication; receiving a first block sequence over a quantum channel, wherein the first block sequence includes a plurality of first single photons related to the quantum signal; generating a plurality of second single photons based on the configuration information; inputting first and second single photons related to each other into a BS; and determining errors in the quantum channel based on a number of detection paths of a photon output from the BS.

Preferably, the first single photons may have N-dimensional properties, where N is an integer greater than or equal to 2.

Preferably, based on that the number of the detection paths is 1, the first single photons input to the BS may be determined to have no errors. Based on that the number of the detection paths is 2, the first single photons input to the BS may be determined to have errors.

Preferably, an error rate of the quantum channel may be determined based on a number of the first single photons determined to have no errors and a loss rate of the quantum channel.

Preferably, when the error rate of the quantum channel is lower than an eavesdropping determination threshold, data may be encoded based on a plurality of third single photons in the first block sequence, and the encoded data may be transmitted.

## ADVANTAGEOUS EFFECTS

According to the present disclosure, quantum information (e.g., high-dimensional quantum information) may be efficiently transmitted and received with low complexity in a quantum communication system.

It will be appreciated by persons skilled in the art that the effects that can be achieved with the present disclosure are not limited to what has been particularly described hereinabove and other advantages of the present disclosure will be more clearly understood from the following detailed description taken in conjunction with the accompanying drawings.

## BRIEF DESCRIPTION OF THE DRAWINGS

The accompanying drawings, which are included to provide a further understanding of the disclosure and are incorporated in and constitute a part of this application, illustrate embodiments of the disclosure and together with the description serve to explain the principle of the disclosure. In the drawings:

FIG. 1 illustrates the structure of a measurement unit of an existing high-dimensional quantum transmission technique.
FIG. 2 illustrates the structure of existing quantum secure direct communication (QSDC).
FIG. 3 illustrates the structure of a transmitter and receiver of a conventional quantum information transmission technique using two-dimensional time bins and phase-based quantum states.
FIG. 4 illustrates existing two-dimensional time bins and phase-based quantum states.
FIG. 5 illustrates phase change properties depending on the input direction of a beam splitter.
FIG. 6 illustrates a transmitter and receiver of a quantum information transmission technique based on two-photon interference.
FIG. 7 illustrates an error detection method based on two-photon interference.
FIG. 8 illustrates the structure of a block sequence applied to quantum communication.
FIG. 9 illustrates the configuration of a transmitter and received based on two-photon interference.

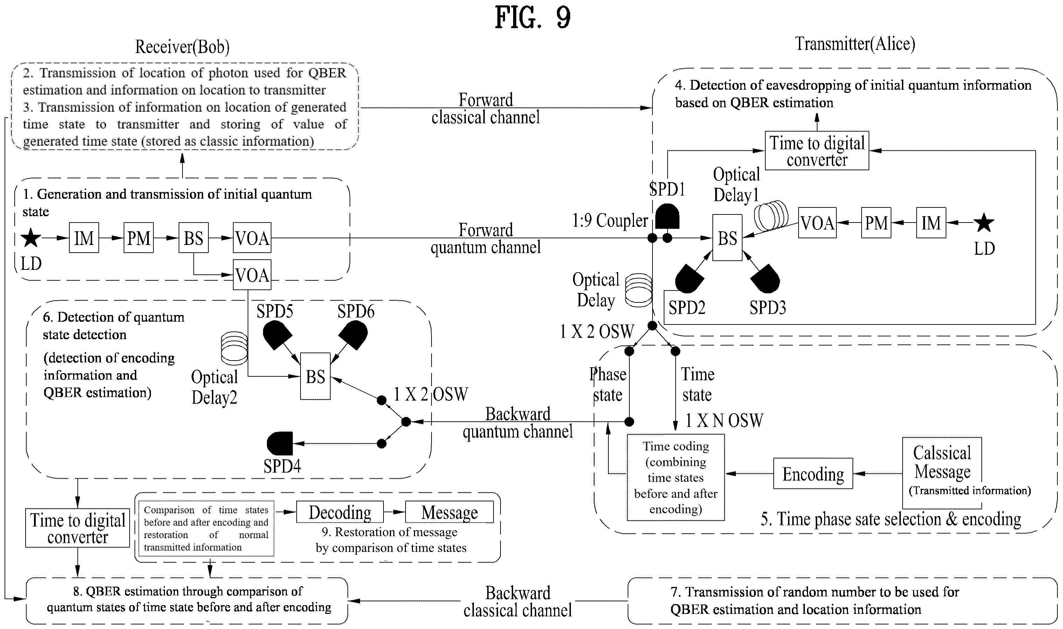

FIG. 9 illustrates the overall configuration of QSDC based on two-photon interference.

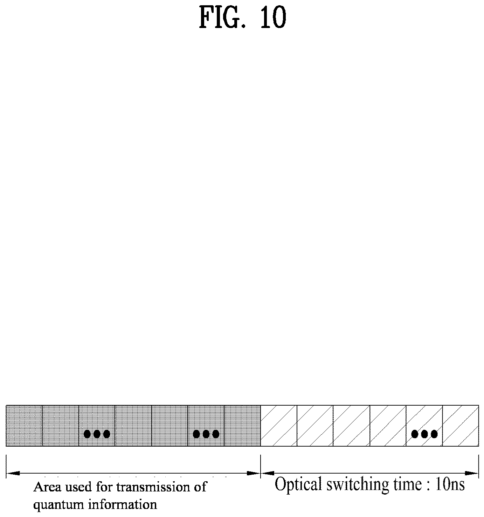

FIG. 10 illustrates the configuration of quantum state information.

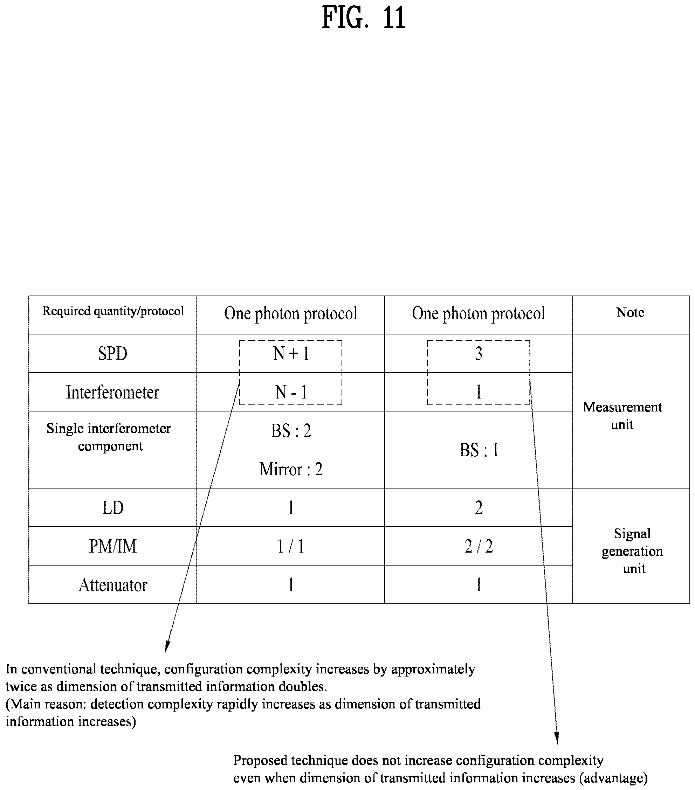

FIG. 11 illustrates complexity comparison results of a conventional method and a method according to the present disclosure.

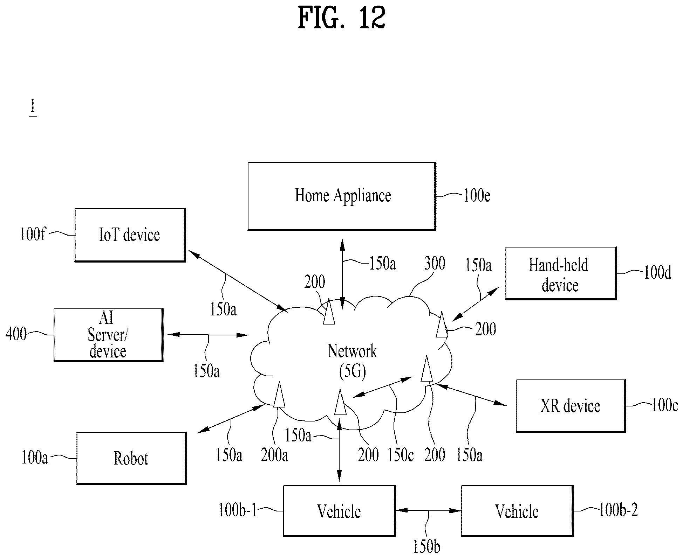

FIGS. 12 to 15 illustrate a communication system 1 and wireless devices, which are applied to the present disclosure.

## DETAILED DESCRIPTION

### Embodiment: Quantum communication based on interference between two photons

The symbols/abbreviations/terms used in this specification are defined follows.

- QSDC: Quantum Secure Direct Communication
- QBER: Quantum Bit Error Rate
- QKD: Quantum Key Distribution
- OSW: Optical Switch
- LD: Laser Diode
- SPD: Single Photon Detector
- AWG: Arbitrary Waveform Generator
- IM: Intensity modulator

- PM: Phase Modulator
- VOA: Variable Optical Attenuator
- MZI: Mach-Zehnder Interferometer
- BS: Beam splitter
- HOM interferometer: Hong-Ou-Mandel interferometer

In current quantum information transmission systems, high-speed quantum information transmission is challenging due to detection speed limitations imposed by hardware constraints such as the dead time of detectors. To overcome this issue, recent research has been conducted on high-dimensional quantum information transmission techniques.

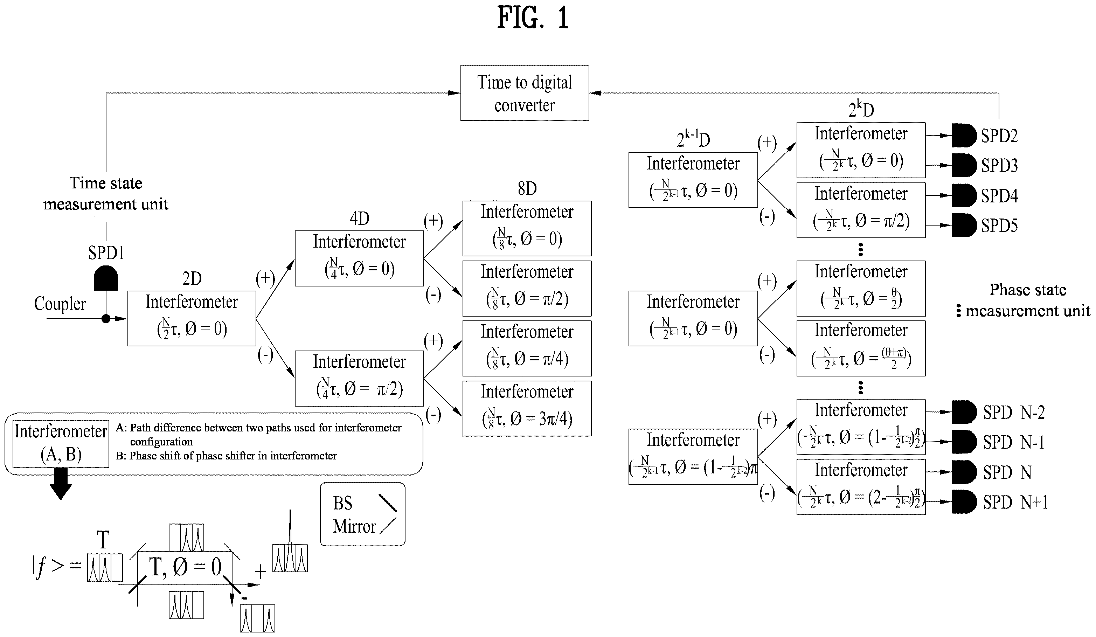

FIG. 1 illustrates the structure of a measurement unit of a high-dimensional quantum transmission technique based on time/phase states. The measuring unit in FIG. 1 may be employed for quantum secure direct communication (QSDC).

Referring to FIG. 1, in high-dimensional quantum information transmission techniques that use $2^k$-dimensional time and phase states for transmission, as the dimension of transmitted information increases, the number of interferometers and single-photon detectors (SPDs) used in the detection process may increase sharply. For instance, in a situation where $2^k$-dimensional quantum information is being measured, $2^k$-1 Mach-Zehnder interferometers (MZIs) using time delays and phase shifts and $2^k$+1 SPDs are required. As a result, as the dimension of quantum information increases, the implementation complexity of a detection unit significantly increases. Furthermore, the increase in the number of SPDs/interferometers may have limitations in implementation due to various factors such as increased cost, increased power consumption, difficulty in miniaturization, increased complexity in controlling components, and increased internal losses. Therefore, the present disclosure proposes a method of configuring a measurement unit using the same resources regardless of increases in the dimension of transmitted information while maintaining the detection efficiency of high-dimensional quantum information at the same level as in the prior art. According to the present disclosure, the implementation complexity of the measurement unit may be greatly reduced compared to the prior art.

The present disclosure provides a method and device for minimizing the complexity of detection in QSDC protocols, which directly transmit information over quantum channels using N-dimensional time and phase states. In N-dimensional QSDC techniques based on time and phase states, the interference phenomenon of photons based on interferometers is employed to measure phase states. The security of the protocol is ensured by determining whether an error exists based on the measurement results. In the existing technique, a single-photon is passed through the tree-structured interferometer of FIG. 1, and then the quantum information obtained along the measured path is compared with the quantum information transmitted from the transmitter to detect errors. However, in the conventional technique, as the dimension of quantum information increases, the tree-structured interferometer becomes more complex, and the usage of connected SPDs increases significantly, which leads to increasing the implementation complexity of the detection unit.

To address the aforementioned issues, the present disclosure provides a method of using interference at a beam splitter (BS) between two photons. Accordingly, it is possible to solve the problem of increased complexity of the detection unit in the conventional technique as the dimension of quantum information increases.

First, the basic configuration of the existing single-photon-based QSDC technique, which serves as the background of the present disclosure, as well as the method of configuring the detection unit using single-photon interference will be described.

## (1) QSDC (Quantum Secure Direct Communication)

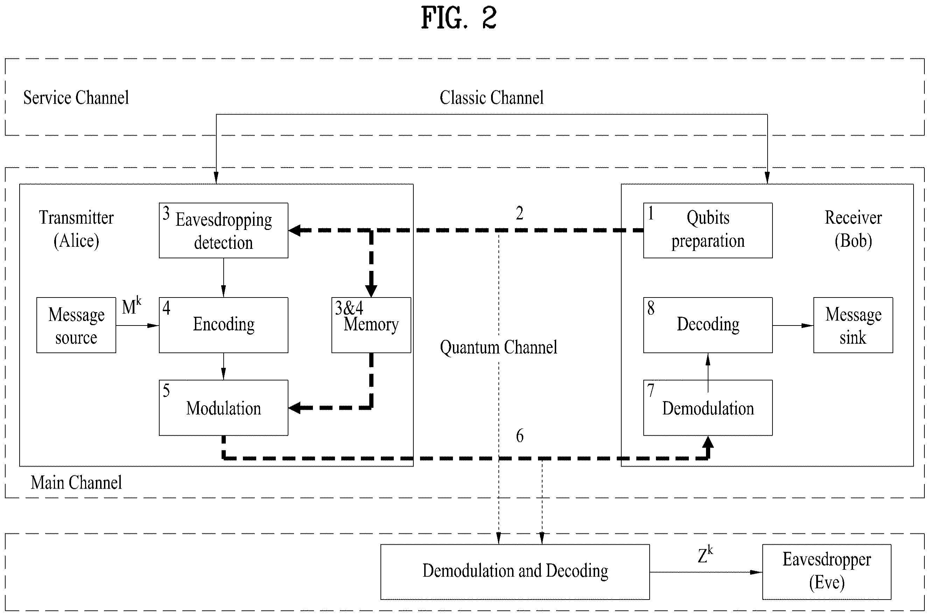

The single-photon-based (DL04) QSDC protocol is a technique that directly transmits a message over a quantum channel, unlike the quantum key distribution (QKD) technique, which is a secret key sharing protocol in quantum cryptography communication systems. The overall configuration of QSDC includes a transmitter, a receiver, a quantum channel, and a classical channel as shown in FIG. 2. The QSDC technique first checks the eavesdropping status of initial quantum information transmitted over the quantum channel shown in FIG. 2 to ensure the security of the initial quantum information (steps 1 to 3). Thereafter, Alice combines the initial information with message information to be transmitted and then transmit the combined information over the quantum channel (steps 4 to 6), and Bob recovers the message and transmit the information (steps 7 and 8). In this case, the security of the information transmitted over the quantum channel is guaranteed for the following reasons: even if an eavesdropper intercepts the information transmitted over the quantum channel, the eavesdropper is incapable of deducing the message information because the eavesdropper is unaware of the initial quantum information.

The quantum information transmission process of the QSDC protocol proceeds as follows.

① The receiver, Bob constructs streams of single photons based on polarization information. Each single photon is randomly generated in one of the following four states.

[Equation 1]

$$|0\rangle = \begin{bmatrix} 1 \\ 0 \end{bmatrix}, \qquad |1\rangle = \begin{bmatrix} 0 \\ 1 \end{bmatrix},$$

$$|+\rangle = \frac{1}{\sqrt{2}} \begin{bmatrix} 1 \\ 1 \end{bmatrix}, \quad |-\rangle = \frac{1}{\sqrt{2}} \begin{bmatrix} 1 \\ -1 \end{bmatrix}.$$

② Bob transmits the generated streams of single photons to Alice.

③ Alice randomly selects some of the received single photons and then randomly chooses either an orthogonal or diagonal basis for measurement. Alice informs Bob of the selected positions, the measurement basis values, and the measurement results over a public channel. Bob estimates a quantum bit error rate (QBER) based on the received information to determine the presence of eavesdropping. If the QBER exceeds a predefined threshold for detecting eavesdropping, the quantum channel is considered unsafe, and thus communication is terminated. Otherwise, the process continues to the next step.

④ Alice encodes a message to send into the remaining streams of single photons except for the streams used for QBER estimation among all the received streams of single photons. The encoding may be performed based on the identity (I) operation, which causes no change if the message information is 0, or the unitary (U) operation if the message information is 1. Equation 2 shows the U operation.

[Equation 2]

$$U|0\rangle = -|1\rangle, \;\; U|1\rangle = |0\rangle$$

$$U|+\rangle = |-\rangle, \;\; U|-\rangle = -|+\rangle$$

⑤ Alice transmits the encoded streams of single photons to Bob.

⑥ To decode a message from the received streams of single photons, Bob measures each single photon with the same basis information as the initial measurement basis. The receiver uses some of the information from the received streams of single photons for the QBER estimation, and the transmitter informs the positions of photons to be used for QBER estimation and the values of encoded bits over the public channel. In this case, the value of a parameter to be used for decoding may be determined based on the measured QBER value.

The QSDC technique allows the message information generated by Alice to be securely transmitted to Bob over the quantum channel via the described process. The security is guaranteed by the security process based on QBER estimation of the initial quantum state at the receiver. If it is confirmed that the initial quantum state is secure from eavesdroppers, the receiver may encode message information into the secure initial quantum state and transmit the encoded message information over a backward quantum channel. Even if an eavesdropper is present on the backward quantum channel and intercepts the transmitted information, the eavesdropper is not allowed to deduce meaningful message information because the eavesdropper does not know the values of the initial quantum state, thereby ensuring security.

**(2) Configuration of detection unit based on single-photon interference and process for QBER estimation.**

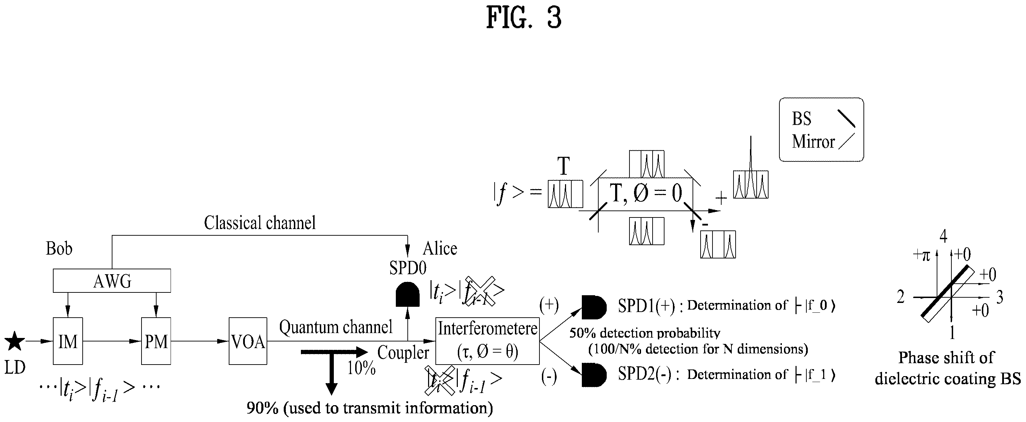

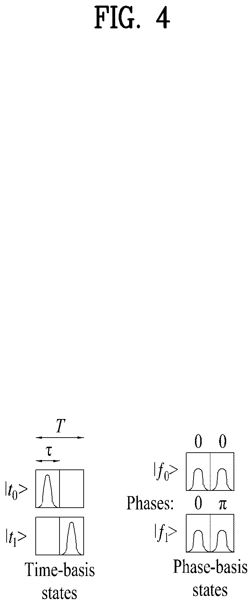

FIG. 3 illustrates the structure of a signal generation unit based on two-dimensional quantum information and a detection unit based on single-photon interference. Bob may generate a time state $|t_i\rangle$ (transmitted classical information is distinguished based on a location where the time state is measured) or a phase states $|f_i\rangle$ (transmitted classical information is distinguished using the difference in interference results due to the phase difference contained in the phase state) and then perform transmission on a quantum channel. In this case, in the QSDC technique, approximately 10% of the information is used to check eavesdropping, while the remaining 90% of the information is used to transmit message information from Alice to Bob. The presence of eavesdroppers is checked by estimating an error rate based on the results which are obtained by SPD 0 to 2 (in the case of two-dimensional information transmission) from the measurement of the time and phase states of the 10% information. First, when the time state $|t_i\rangle$ enters SPD 0, the time state is measured using measurement timing information. When the phase state $|f_i\rangle$ enters, the phase state is measured by determining which one of SPD1 and SPD2 experiences reinforced interference from the reinforced interference results obtained in the central time bin after passing through an MZI with a time delay corresponding to one time bin, as shown in FIG. 3. In the case of two-dimensional quantum information transmission, as shown in FIG. 4, two time states: $|t_0\rangle$ *and* $|t_1\rangle$ and two phase states $|f_0\rangle \left( = \frac{1}{\sqrt{2}} (|t_0\rangle + |t_1\rangle) \right)$ *and* $|f_1\rangle ( = \frac{1}{\sqrt{2}} (|t_0\rangle - |t_1\rangle))$ are configured. The time state is determined as $|t_0\rangle$ if detected in SPD 0 at a time corresponding to the first time bin, or the time state is determined as $|t_1\rangle$ if detected in SPD 0 at a time corresponding to the second time bin. The phase state is measured as $|f_0\rangle$ if detected in SPD1 or $|f_1\rangle$ if detected in SPD2 after passing through the interferometer. Information on the values initially generated by Bob is transmitted to Alice over a classical channel. Alice may check how many errors occur in the received information by comparing the values initially generated by Bob with measurement results. The error rate may be checked based on an equation for QBER estimation. The presence or absence of eavesdropping may be determined by checking whether the QBER exceeds a predetermined threshold.

Equation 3 shows an equation for QBER estimation.

QBER = the number of cases where errors occur / the number of cases where bases match = {the total number of cases where the time state (or phase state) values do not match based on time basis (or phase basis) matching information at the transmitter and receiver} / (the total number of cases where the time basis matches between the transmitter and receiver + the total number of cases where the phase basis matches)

In the case of phase states, since only the results when interference occurs in the middle time bin out of the three time bins after interference occurs through the MZI, which has a structure in which a single photon is divided into two paths with a time difference corresponding to one time bin, are used, measurements are not obtained in the remaining 50% of cases. Therefore, the measurement efficiency is 50% for two-dimensional quantum information transmission, and the detection efficiency decreases by half as the dimension doubles.

To aid understanding, the simplest measurement method for transmitting two-dimensional information is given as an example. However, when increasing the dimension of transmitted information to N dimensions, N time states and N phase states are required for error estimation (e.g., QBER estimation). As the dimension of the transmitted information increases, the usage of interferometers and SPDs also increases. Additionally, for error estimation to check eavesdropping, the transmitter and receiver need to exchange basis information and measurement results used by the transmitter and receiver over the classical channel.

Hereinafter, the present disclosure proposes an efficient method to minimize the complexity of a detection unit due to an increase in the usage of interferometers and detectors, resulting from an increase in the dimension of transmitted information when the single-photon interference phenomenon is used in the phase state measurement process of the conventional time and phase state measurement process. For this purpose, unlike the prior art, the present disclosure applies a two-photon interference phenomenon where a single photon is generated independently in both the transmitter and receiver and simultaneous interference occurs at a 50:50 BS.

The method of measuring a phase state based on two-photon interference, which is applied in this specification utilizes a quantum phenomenon known as the Hong-Ou-Mandel (HOM) effect. The HOM effect refers to the property where if two photons with identical characteristics simultaneously enter a 50:50 BS, the two photons are emitted in only one of the two output directions after experiencing interference at the BS. Accordingly, if one of the photons is affected by the presence of an eavesdropper, changes occur in the properties of the original photon such as the phase thereof. As a result, after the interference at the BS, photons may be detected individually in two output directions of the BS, rather than being detected in only one of the two output directions. According to the present disclosure, a method of determining the presence of errors may be applied based on these characteristics, thereby reducing the complexity of conventional detection techniques.

The HOM interference phenomenon using two photons may be expressed mathematically as follows.

**HOM effect:**

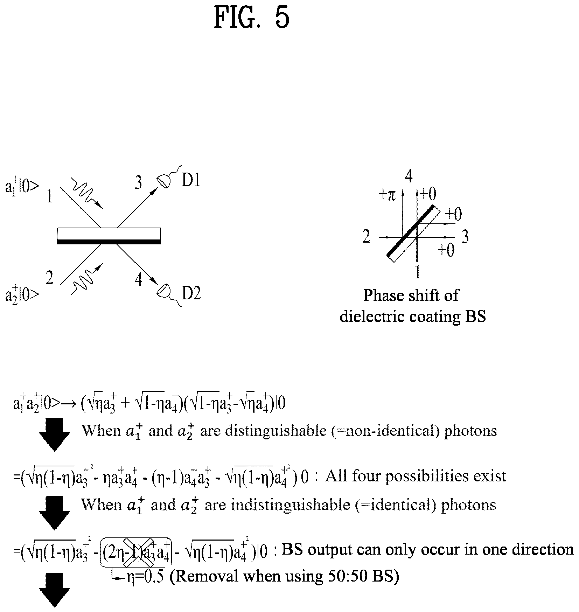

When the BS reflectance is defined as $\eta$, the results according to the BS input in FIG. 5 are as follows.

[Equation 4]
$$a_1^\dagger |0\rangle \rightarrow (\sqrt{\eta}a_3^\dagger + \sqrt{1-\eta}a_4^\dagger)|0\rangle$$

In other words, (1) a photon (a1) incident in direction 1 may be reflected/output in direction 3 and detected at SPD1 (D1) (a3); or (2) a photon (a1) may travel straight/be output in direction 4 and be detected at SPD2 (D2) (a4). Photons are detected only in either SPD1 (D1) or SPD2 (D2), and the detection probabilities are given based on the reflectance as $\sqrt{\eta}$ and $\sqrt{1-\eta}$, respectively.

The output when two photons simultaneously enter the BS may be defined as follows according to the equation in FIG. 5.

Referring to the equation in FIG. 5, if the photons incident on the BS from two directions have different properties, single photons from the transmitter and receiver have four output possibilities: (reflection, reflection), (reflection, transmission), (transmission, reflection), and (reflection, reflection). However, when the properties of the two photons are identical, the output possibilities of (reflection, reflection) and (transmission, transmission) do not exist. Therefore, the photons are output in the two directions, and thus the photons are not detected in SPD1 (D1) and SPD2 (D2). According to the present disclosure, when two photons are simultaneously detected at SPDs in two directions after passing through the 50:50 BS, even if the two photons have the same properties in the initial state, it may mean that the properties of the photons in the two directions are changed, which may be determined as an error.

To utilize the above-described characteristics, it is necessary for the two photons to simultaneously undergo interference at the BS as described above in FIG. 5. However, in the case of the phase state mentioned herein, the probability of a single photon being present in multiple time bins is equal, but when detected, a single photon is detected in only one of the time bins. Therefore, even if the same phase state is present in both directions, the phase state does not cause simultaneous interference at the BS. Hence, it is difficult to check the presence of errors in non-simultaneous interference cases. Therefore, to use the interference between two photons for error detection, a method of distinguishing or eliminating non-simultaneous interference cases during the error detection is required. Hereinafter, a method of measuring a phase state based on interference between two photons and a process of checking eavesdropping will be described.

## Configuration of detection unit based on interference between two photons and process for QBER estimation.

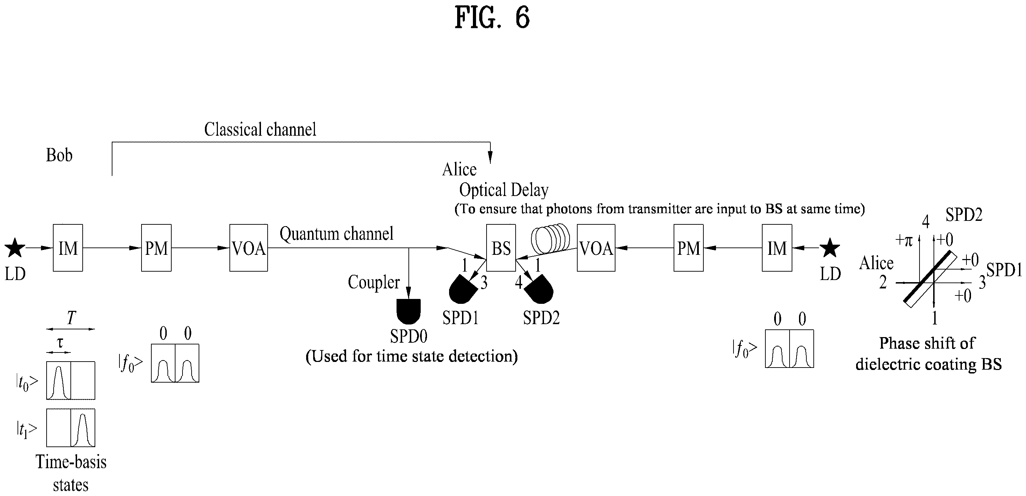

FIG. 6 illustrates the configurations of a transmitter and receiver of a quantum information transmission system based on interference between two photons according to an embodiment of the present disclosure. Referring to FIG. 6, Alice and Bob generate a phase states $|f_0\rangle$ with the same properties. Then, Alice may determine whether there is any changes in the properties of $|f_0\rangle$ transmitted by Bob due to the presence of an eavesdropper on a quantum channel based on the results of interference between two photons at a BS. Compared to conventional techniques, the present disclosure requires the addition of an optical signal generation device with the same structure as that in the transmitter to the receiver. The reason for this is that an optical signal with the same properties as the transmitter is needed during a detection process to determine whether there is an error in the phase state. To ensure that the quantum states (i.e., photons) generated in the transmitter and receiver enter the BS of Alice simultaneously, an optical delay line may be used to adjust the timing of the entry of the quantum states (i.e., photons) generated by Alice.

In the transmitter and receiver of the present disclosure, the time state is detected at SPD0 after generation, and it is possible to check the presence of errors by checking the match between (1) detection results at SPD0 and (2) original transmitted information received over a classical channel, similarly to conventional systems based on single-photon interference.

However, regarding phase states, the transmitter and receiver of the present disclosure use only a single phase state called $|f_0\rangle$ regardless of the dimension of the transmitted quantum information, unlike conventional techniques. An error may only be determined if the results measured by SPD1 and SPD2 are detected simultaneously on both sides. In the conventional N-dimensional transmission technique, all N phase states are used, but according to the present disclosure, an error may be determined only when the phase states in two directions are the same. Thus, to maximize detection efficiency, it is considered that the transmitter and receiver always transmit the same phase state, $|f_0\rangle$.

When considering a two-dimensional case, the likelihood that phase states with the same properties incident from both directions meet at the BS of Alice at the same time is limited to only 50% of cases where a single photon is simultaneously detected in either the first time bin or the second time bin and causes interference. The remaining cases where simultaneous detection does not occur are excluded from the error determination. As a result, the detection efficiency of both the conventional technique and the technique according to the present disclosure is 50% in the case of two-dimensional cases. When increasing to N dimensions, the detection efficiency of phase states remains at 100/N %.

The QBER estimation process to determine the presence of an eavesdropper may be determined by the ratio of the number of errors to the total number of measured time states and phase states. Hereinafter, a process for estimating errors in two quantum states will be described.

In the error estimation process using time states, only cases where the time state generated by Bob is detected in SPD0 are included in the denominator of the entire QBER. In addition, only cases where the time state generated by Bob and the time state measured by SPD0 of Alice are determined to be different by comparing the time state generated by Bob and the time state measured by SPD0 of Alice over the classical channel may be included as error cases in the numerator.

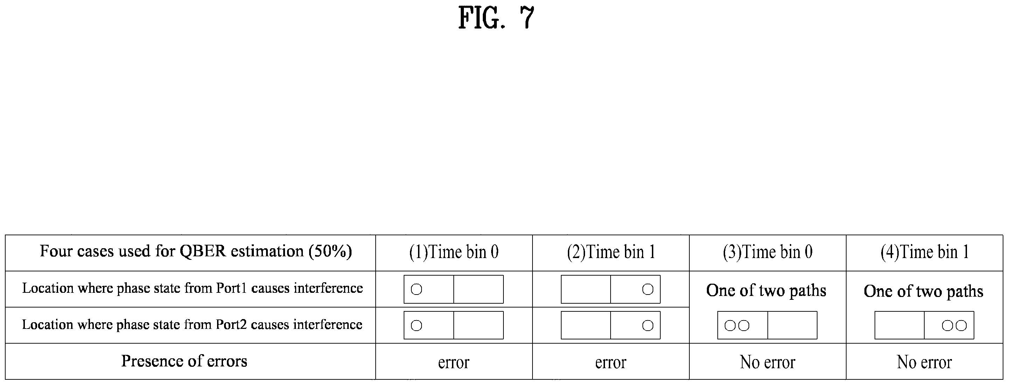

The error estimation process using phase status is defined as follows. As shown in FIG. 7, among cases where the phase state generated by Bob and the phase state generated by Alice cause simultaneous interference at the BS and are simultaneously detected at SPD1 and SPD2 (i.e., when errors occur) (1) and (2) and cases where the phase states are detected at only one of SPD1 and SPD2 (i.e., when errors do not occur due to the simultaneous interference of two photons) (3) and (4), only cases where errors occur, i.e., when the phase states are simultaneously detected at SPD1 and SPD2, may be included in the numerator.

FIG. 7 illustrates error detection based on interference between two quantum states input to the BS shown in FIG. 6. Referring to Figure 7, (1) represents cases where the two quantum states input to the BS simultaneously interfere at the time corresponding to time bin 0, are simultaneously detected at SPD1 to SPD2, and thus are classified as errors, and (2) represents cases where the two quantum states input to the BS simultaneously interfere at the time corresponding to time bin 1, are simultaneously detected at SPD1 to SPD2, and thus are classified as errors. On the other hand, (3) represents cases where the two quantum states input to the BS simultaneously interfere at the time corresponding to time bin 0, but the two quantum states are measured at only one of SPD1 or SPD2 and thus are not classified as errors, and (4) represents cases where the two quantum states input to the BS simultaneously interfere at the time corresponding to time bin 1, but the two quantum states are measured at only one of the detectors and thus are not classified as errors. However, (1) to (4) only consider cases where N-dimensional phase states generated by the transmitter and receiver interfere at the same time at the BS. Therefore, (1) to (4) correspond to 1/N of the total number of cases where the phase states from the transmitter and receiver match. That is, (1) to (4) correspond to the total number of cases where simultaneous detection occurs at either SPD1 or SPD2 among cases where the phase basis matches in the following equation.

The overall QBER equation obtained from the above is as follows.

QBER = (the total number of cases where errors occur among cases where the basis information of the transmitter and receiver matches) / (the total number of cases where errors occur and cases where errors do not occur among cases where the basis information of the transmitter and receiver matches)

In Equation 5, the numerator may represent <the total number of cases where the time state values do not match among cases where the time basis information of the transmitter and receiver matches + the total number of cases where simultaneous detection occurs at SPD1 and SPD2 among cases where the phase basis information of the transmitter and receiver matches>. In addition, the denominator may represent <the number of cases where the time bases of the transmitter and receiver matches (detection at SPD0) and the number of cases where detection occurs at SPD1 or SPD2 at the same time among cases where the phase bases of the transmitter and receiver matches>.

Regarding <the number of cases where detection occurs at SPD1 or SPD2 at the same time among cases where the phase basis matches> of the denominator, there may be cases where the phase state generated by Bob and transmitted over a quantum channel is not received by Alice due to quantum channel losses. However, in this case, the phase state generated by Alice is incident on the BS. As a result, photons may be detected in only one of the SPDs, and thus, there may be an issue that no error is detected even if the phase state is not received from Bob. Therefore, a method is needed to remove a part caused by quantum channel loss when determining the error rate (e.g., QBER).

**Method of eliminating cases determined as detected due to losses in quantum channel.**

According to this method, to eliminate errors caused by information losses, the loss rate of transmitted information due to a quantum channel may be precomputed using test pulses. Accordingly, the proportion of quantum states transmitted from the transmitter that is removed due to channel losses may be removed from the QBER denominator in Equation 5.

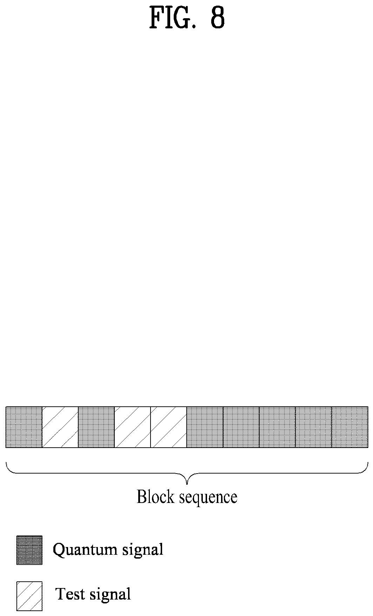

(1) The transmitter may generate an additional test signal to determine the loss rate of the quantum channel transmission process, form a single block sequence mixed with a quantum signal (quantum state), and then transmit the single block sequence to the receiver. FIG. 8 illustrates the structure of a block sequence applied to quantum communication. (2) The receiver requires position sharing of the test signal within the block sequence for the measurement of the test signal transmitted from the transmitter. However, if an eavesdropper knows the location of the test signal, the eavesdropper may manipulate the QBER. Therefore, to avoid disclosing the position of the test signal, the transmitter and receiver may prearrange the position of the test signal at the same location and determine the reception status of the test signal to estimate the channel losses. Furthermore, to avoid disclosing the position of the test signal, after the transmitter transmits the test signal, the receiver may estimate the channel losses by sharing only a portion used for measurement by the receiver with the transmitter over a public channel, along with the measurement location and measurement status. (3) A channel loss rate $\alpha$ may be determined by the ratio of the number of test signals received by the receiver to the number of test signals transmitted by the transmitter. The channel loss rate $\alpha$ may be defined as (the number of lost signals among all the signals) / (the total number of signals). Alternatively, the channel loss rate $\alpha$ may be defined as (the total number of signals - the number of test signals received by the receiver) / (the total number of signals). Based on this, it is possible to remove cases corresponding to the channel loss rate from the QBER denominator in Equation 5, which corresponds to <the number of cases where detection occurs at SPD1 or SPD2 at the same time among cases where the phase basis matches>.

For example, <the number of cases where detection occurs at SPD1 or SPD2 at the same time among cases where the phase basis matches> in the QBER equation of Equation 5 may be modified by subtracting $\alpha$ * (the total number of generated signals) from <the number of cases where detection occurs at SPD1 or SPD2 at the same time among cases where the phase basis matches>.

k = <the number of cases where detection occurs at SPD1 or SPD2 at the same time among cases where the phase basis matches> - $\alpha$ * (the total number of generated signals)

Accordingly, the final QBER equation is defined as follows.

QBER = (the total number of cases where the time state values do not match among cases where the time basis information of the transmitter and receiver matches + the total number of cases where simultaneous detection occurs at SPD1 and SPD2 among cases where the phase basis information of the transmitter and receiver matches) / (the total number of cases where the time basis matches between the transmitter and receiver + k)

## Overall configuration of low-complexity N-dimensional single-photon-based OSDC technique based on two-photon interference

The error detection technique based on two-photon interference proposed above may be employed to measure the QBER of both forward and backward quantum channels in QSDC. FIG. 9 illustrates the overall configuration of a technique that configures QSDC based on a quantum states including time and phase states and measures a QBER based on two-photon interference.

Referring to FIG. 9, the entire process may be carried out in the following order.

(1) An initial N-dimensional quantum state (e.g., time and phase states) is generated by Bob. Before attenuating the initially generated quantum information to the single-photon level, the quantum information may be split into two directions by a BS. Subsequently, the quantum information in one of the two directions is attenuated to the single-photon level and transmitted over the forward quantum channel, while the other part is used as one of the input states of the BS for estimating the QBER in the phase state that returns over the backward quantum channel. If the initially generated phase state remains unchanged while passing through the bidirectional quantum channels (e.g., if there are no eavesdroppers), it is possible to perform error detection by storing the initially generated phase state in optical delay 2 and then utilizing the absence of simultaneous photon detection at both directions (SPD5 and SPD6) of the BS output when interference occurs at the BS. The QBER may be estimated based on the ratio of the ratio of error-detected cases to all detection events.

(2) After the initial quantum state is transmitted over the quantum channel, the QBER estimation may be performed using the above-described two-photon interference phenomenon to check the presence of eavesdropping on the initial quantum state (see FIG.

9). In this case, the necessary information may be exchanged over a classical channel. If the QBER does not exceed a threshold value (e.g., 11%), security against eavesdropping is ensured, and thus the next steps may proceed. Otherwise, the process may be terminated.

(3) In the QBER estimation process, only a portion of the received quantum information (e.g., approximately 10%) is used. The remaining quantum information not used in the QBER estimation process (e.g., 90% of the quantum information) is stored in optical delay 1. Based on the position information on the initial phase state obtained through the classical channel, the phase state and time state may be distinguished using an optical switch (OSW). After the distinguishment, the time state may be used to encode message information to be transmitted from the transmitter. On the other hand, the phase state may be used as it is to estimate the QBER on the backward quantum channel, without encoding of separate message information.

(4) In the case of the phase state, the quantum information transmitted over the backward quantum channel may be used to restore the QBER and transmitted message values by connecting the quantum information to a correct measurement path based on the state information of time-dependent quantum information known at the OSW of the receiver.

The QBER estimation may be carried out using the phase state and the time state that is not used for message encoding. The receiver may determine the QBER by determining the rate at which the value of the transmitted information changes compared to the initial state. In the case of message information composed of only the time state, the receiver may obtain the original message information by decoding inferred classical information based on information in the known initial time state and information on the time difference between the received time states.

## Method of routing time and phase states transmitted over backward quantum channel to each correct detection path using OSW

The OSW is used for path switching when the current optical signal and the next optical signal need to be transmitted along different paths. This allows for preventing cases where the time and phase states are transmitted to incorrect measurement paths and as a result, transmitted information is lost (for example, cases where the time state is detected at SPD5 and SPD6 or the phase state is detected at SPD4 in FIG. 9).

However, the path switching process requires a switching time, and currently, the fastest commercially available optical switching time is known to be at least around 10 ns. Accordingly, in this method, for initially generated quantum state information (e.g., time/phase states), an additional time gap for the optical switching time (e.g., a minimum of 10 ns) is introduced between preceding and succeeding quantum state information as shown in FIG. 10.

Additionally, the receiver may store the position information on all the quantum states initially generated by the receiver until a signal returns over the backward quantum channel. Subsequently, based on the position information on the stored quantum states, the receiver may control the OSW to determine which path of the measurement path (SPD4) for the time state and the measurement path (SPD5 and SPD6) for the phase state will be used for measurement of the received information.

Phase state measurement method for receiver

The receiver requires a measurement process for determining whether there is an error in the initial phase state that returns over a backward quantum channel. To this end, the receiver may generate the same phase state as the phase state initially transmitted over a forward quantum channel using a laser diode, PM, and IM and then introduce the phase state at the same timing as the phase state passing through the backward quantum channel enters the BS, thereby causing two-photon interference. Furthermore, the receiver may identify how many errors are present in the received phase states, enabling the estimation of the QBER. The receiver may determine whether there is an error in each state based on the measurement results at SPD5 and SPD6 in the same way as the QBER estimation process on the forward quantum channel described above (see FIGS. 6 and 7). The receiver may estimate the QBER by determining how many errors are present in the received phase state.

In this document, the method based on two-photon interference is proposed to solve the problem that the configuration complexity increases as the dimension of transmitted information increases in the conventional single-photon interference technique. In the conventional technique, the configuration complexity increases by approximately twice as the dimension of the transmitted information doubles. The proposed method in this specification has the advantage that, even as the dimension of the transmitted information increases, there are no additional resources required, allowing for the generation of the QSDC technique with consistent configuration complexity at all times.

FIG. 11 illustrates a comparison of the configuration complexity between the conventional single-photon technique and the two-photon technique of the present disclosure in terms of key components and devices.

Referring to FIG. 11, a signal generation unit of the present disclosure employs an additional laser light source and PM/IM to generate bidirectional photons. However, a measurement unit of the present disclosure may significantly reduce the configuration complexity when transmitting N-dimensional quantum information.

The reason for the reduction in complexity lies in the reduced use of (SPD) and interferometers. In the conventional technique, as the dimension of transmitted information increases, the number of SPDs/interferometers also increases. However, according to the method proposed in the present disclosure, the used resources are fixed at three SPDs and one interferometer, regardless of the dimension of the transmitted information. Further, according to the method proposed in the present disclosure, the internal structure of a single interferometer has a simpler configuration (one BS) compared to the conventional technique (two BSs, two mirrors, and one phase controller). Therefore, the method proposed in the present disclosure may also offer significant advantages in terms of the complexity of the interferometer.

The method proposed in the present disclosure may be used in various communication environments based on quantum information and is applicable to both wired and wireless communication technologies. The various details, functions, procedures, proposals, methods, and/or operational flowcharts described in this document may be applied to a variety of fields that require wireless communication/connections (e.g., 4G network (LTE network), 5G network (NR network), etc.) between devices. However, the present disclosure is not limited thereto.

Hereinafter, a description will be given in more detail with reference to the drawings. In the following drawings/description, the same reference symbols may denote the same or corresponding hardware blocks, software blocks, or functional blocks unless described otherwise.

In the present disclosure, the at least one memory (e.g., 104 or 204) may store instructions or programs, and the instructions or programs may cause, when executed, at least one processor operably connected to the at least one memory to perform operations according to some embodiments or implementations of the present disclosure.

In the present disclosure, a computer readable storage medium may store at least one instruction or program, and the at least one instruction or program may cause, when executed by at least one processor, the at least one processor to perform operations according to some embodiments or implementations of the present disclosure.

In the present disclosure, a computer program may be recorded in at least one computer-readable (non-volatile) storage medium, and may include a program code that causes (at least one processor) to perform an operation when being executed according to some embodiments or implements of the present disclosure. The computer program may be provided in the form of a computer program product. The computer program product may include at least one computer readable (non-volatile) storage medium, and the computer readable storage medium may include a program code that causes (at least one processor) to perform an operation when being executed according to some embodiments or implements of the present disclosure.

In the present disclosure, a processing device or apparatus may include at least one processor, and at least one computer memory operably connected to the at least one processor. The at least one computer memory may store instructions or programs, and the instructions or programs may cause, when executed, the at least one processor operably connected to the at least one memory to perform operations according to some embodiments or implementations of the present disclosure.

A communication device of the present disclosure includes at least one processor; and at least one computer memory operably connected to the at least one processor and configured to store instructions for causing, when executed, the at least one processor to perform operations according to example(s) of the present disclosure described later.

FIG. 12 illustrates a communication system 1 applied to the present disclosure.

Referring to FIG. 12, a communication system 1 applied to the present disclosure includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous driving vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g. relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

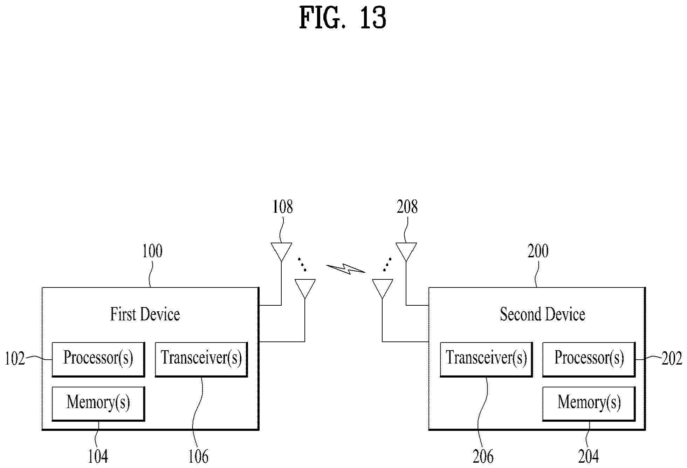

FIG. 13 illustrates wireless devices applicable to the present disclosure.

Referring to FIG. 13, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 12.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

Hereinafter, hardware elements of the wireless devices 100 and 200 will be described more specifically.

One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

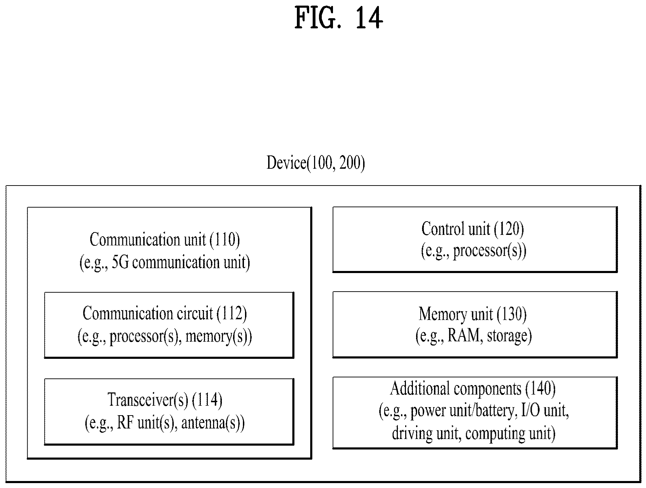

FIG. 14 illustrates another example of a wireless device applied to the present disclosure. The wireless device may be implemented in various forms according to a use-case/service (refer to FIG. 12).

Referring to FIG. 14, wireless devices 100 and 200 may correspond to the wireless devices 100 and 200 of FIG. 13 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 13. For example, the transceiver(s) 114 may include the one or more transceivers 106 and 206 and/or the one or more antennas 108 and 208 of FIG. 13. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 12), the vehicles (100b-1 and 100b-2 of FIG. 12), the XR device (100c of FIG. 12), the hand-held device (100d of FIG. 12), the home appliance (100e of FIG. 12), the IoT device (100f of FIG. 12), a digital broadcast terminal, a hologram device, a public safety device, an MTC device, a medicine device, a fintech device (or a finance device), a security device, a climate/environment device, the AI server/device (400 of FIG. 12), the BSs (200 of FIG. 12), a network node, etc. The wireless device may be used in a mobile or fixed place according to a use-example/service.

In FIG. 14, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

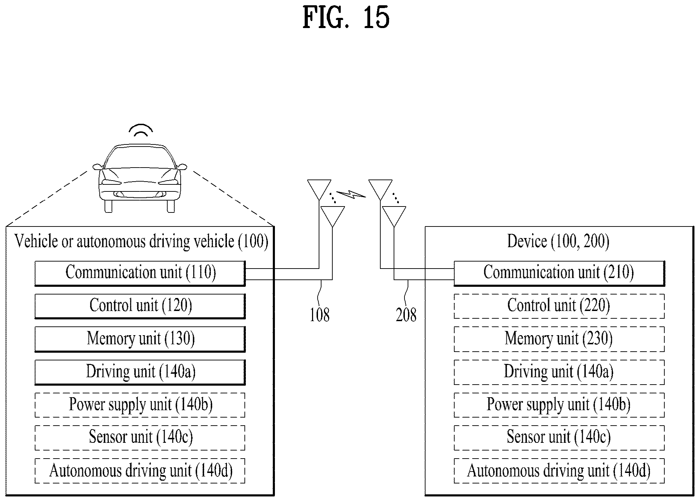

FIG. 15 illustrates a vehicle or an autonomous driving vehicle applied to the present disclosure. The vehicle or autonomous driving vehicle may be implemented by a mobile robot, a car, a train, a manned/unmanned Aerial Vehicle (AV), a ship, etc.

Referring to FIG. 15, a vehicle or autonomous driving vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 14, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous driving vehicle 100. The control unit 120 may include an Electronic Control Unit (ECU). The driving unit 140a may cause the vehicle or the autonomous driving vehicle 100 to drive on a road. The driving unit 140a may include an engine, a motor, a powertrain, a wheel, a brake, a steering device, etc. The power supply unit 140b may supply power to the vehicle or the autonomous driving vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the obtained data. The control unit 120 may control the driving unit 140a such that the vehicle or the autonomous driving vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly obtained data/information. The communication unit 110 may transfer information about a vehicle position, the autonomous driving path, and/or the driving plan to the external server. The external server may predict traffic information data using AI technology, etc., based on the information collected from vehicles or autonomous driving vehicles and provide the predicted traffic information data to the vehicles or the autonomous driving vehicles.

The above-described embodiments correspond to combinations of elements and features of the present disclosure in prescribed forms. And, the respective elements or features may be considered as selective unless they are explicitly mentioned. Each of the elements or features can be implemented in a form failing to be combined with other elements or features. Moreover, it is able to implement an embodiment of the present disclosure by combining elements and/or features together in part. A sequence of operations explained for each embodiment of the present disclosure can be modified. Some configurations or features of one embodiment can be included in another embodiment or can be substituted for corresponding configurations or features of another embodiment. And, it is apparently understandable that an embodiment is configured by combining claims failing to have relation of explicit citation in the appended claims together or can be included as new claims by amendment after filing an application.

Those skilled in the art will appreciate that the present disclosure may be carried out in other specific ways than those set forth herein without departing from the spirit and essential characteristics of the present disclosure. The above embodiments are therefore to be construed in all aspects as illustrative and not restrictive. The scope of the disclosure should be determined by the appended claims and their legal equivalents, not by the above description, and all changes coming within the meaning and equivalency range of the appended claims are intended to be embraced therein.

## INDUSTRIAL APPLICABILITY

The present disclosure is applicable to UEs, BSs or other apparatuses of a wireless mobile communication system.

# Claims

1. A method used by a communication device in a quantum communication system, the method comprising:

   obtaining configuration information regarding a quantum signal used in quantum communication;
   receiving a first block sequence over a quantum channel, wherein the first block sequence includes a plurality of first single photons related to the quantum signal;
   generating a plurality of second single photons based on the configuration information;
   inputting first and second single photons related to each other into a beam splitter (BS); and
   determining whether there are errors in the quantum channel based on a number of detection paths of a photon output from the BS.

2. The method of claim 1, wherein the first single photons have N-dimensional properties, where N is an integer greater than or equal to 2.

3. The method of claim 1, wherein based on that the number of the detection paths is 1, the first single photons input to the BS are determined to have no errors, and
   wherein based on that the number of the detection paths is 2, the first single photons input to the BS are determined to have errors.

4. The method of claim 3, wherein an error rate of the quantum channel is determined based on a number of the first single photons determined to have no errors and a loss rate of the quantum channel.

5. The method of claim 4, wherein based on that the error rate of the quantum channel is lower than an eavesdropping determination threshold:

   data is encoded based on a plurality of third single photons in the first block sequence; and
   the encoded data is transmitted.

6. A communication device used in a quantum communication system, the communication device comprising:

   at least one transceiver;
   at least one processor; and
   at least one computer memory operably connected to the at least one processor and configured to, when executed, cause the at least one processor to perform operations comprising:

      obtaining configuration information regarding a quantum signal used in quantum communication;
      receiving a first block sequence over a quantum channel, wherein the first block sequence includes a plurality of first single photons related to the quantum signal;
      generating a plurality of second single photons based on the configuration information;
      inputting first and second single photons related to each other into a beam splitter (BS); and
      determining whether there are errors in the quantum channel based on a number of detection paths of a photon output from the BS.

7. The communication device of claim 6, wherein the first single photons have N-dimensional properties, where N is an integer greater than or equal to 2.

8. The communication device of claim 6, wherein based on that the number of the detection paths is 1, the first single photons input to the BS are determined to have no errors, and
   wherein based on that the number of the detection paths is 2, the first single photons input to the BS are determined to have errors.

9. The communication device of claim 8, wherein an error rate of the quantum channel is determined based on a number of the first single photons determined to have no errors and a loss rate of the quantum channel.

10. The communication device of claim 9, wherein based on that the error rate of the quantum channel is lower than an eavesdropping determination threshold:

    data is encoded based on a plurality of third single photons in the first block sequence; and
    the encoded data is transmitted.

11. An apparatus for a quantum communication device, the apparatus comprising:

    at least one processor; and
    at least one computer memory operably connected to the at least one processor and configured to, when executed, cause the at least one processor to perform operations comprising:

       obtaining configuration information regarding a quantum signal used in quantum communication;
       receiving a first block sequence over a quantum channel, wherein the first block sequence includes a plurality of first single photons related to the quantum signal;
       generating a plurality of second single photons based on the configuration information;

inputting first and second single photons related to each other into a beam splitter (BS); and

determining whether there are errors in the quantum channel based on a number of detection paths of a photon output from the BS.

12. The apparatus of claim 11, wherein the first single photons have N-dimensional properties, where N is an integer greater than or equal to 2.

13. The apparatus of claim 11, wherein based on that the number of the detection paths is 1, the first single photons input to the BS are determined to have no errors, and

wherein based on that the number of the detection paths is 2, the first single photons input to the BS are determined to have errors.

14. The apparatus of claim 13, wherein an error rate of the quantum channel is determined based on a number of the first single photons determined to have no errors and a loss rate of the quantum channel.

15. The apparatus of claim 14, wherein based on that the error rate of the quantum channel is lower than an eavesdropping determination threshold:

data is encoded based on a plurality of third single photons in the first block sequence; and the encoded data is transmitted.

16. A computer-readable storage medium comprising at least one computer program that, when executed, causes the at least one processor to perform operations comprising:

obtaining configuration information regarding a quantum signal used in quantum communication;

receiving a first block sequence over a quantum channel, wherein the first block sequence includes a plurality of first single photons related to the quantum signal;

generating a plurality of second single photons based on the configuration information;

inputting first and second single photons related to each other into a beam splitter (BS); and

determining whether there are errors in the quantum channel based on a number of detection paths of a photon output from the BS.

17. The computer-readable storage medium of claim 16, wherein the first single photons have N-dimensional properties, where N is an integer greater than or equal to 2.

18. The computer-readable storage medium of claim 16, wherein based on that the number of the detection paths is 1, the first single photons input to the BS are determined to have no errors, and

wherein based on that the number of the detection paths is 2, the first single photons input to the BS are determined to have errors.

19. The computer-readable storage medium of claim 18, wherein an error rate of the quantum channel is determined based on a number of the first single photons determined to have no errors and a loss rate of the quantum channel.

20. The computer-readable storage medium of claim 19, wherein based on that the error rate of the quantum channel is lower than an eavesdropping determination threshold:

data is encoded based on a plurality of third single photons in the first block sequence; and the encoded data is transmitted.

# FIG. 1

FIG. 2

# FIG. 3

EP 4 412 111 A1

# FIG. 4

Time-basis
states

Phase-basis
states

# FIG. 5

Phase shift of
dielectric coating BS

$$a_1^+ a_2^+ |0> \rightarrow (\sqrt{\eta}a_3^+ + \sqrt{1-\eta}a_4^+)(\sqrt{1-\eta}a_3^+ - \sqrt{\eta}a_4^+)|0$$

⬇ When $a_1^+$ and $a_2^+$ are distinguishable (=non-identical) photons

$$= (\sqrt{\eta(1-\eta)}a_3^{+2} - \eta a_3^+ a_4^+ - (\eta-1)a_4^+ a_3^+ - \sqrt{\eta(1-\eta)}a_4^{+2})|0 \quad : \text{All four possibilities exist}$$

⬇ When $a_1^+$ and $a_2^+$ are indistinguishable (=identical) photons

$$= (\sqrt{\eta(1-\eta)}a_3^{+2} - \boxed{(2\eta-1)a_3^+ a_4^+} - \sqrt{\eta(1-\eta)}a_4^{+2})|0 \quad : \text{BS output can only occur in one direction}$$

└ $\eta$=0.5 (Removal when using 50:50 BS)

⬇

FIG. 6

# FIG. 7

| Four cases used for QBER estimation (50%) | (1)Time bin 0 | (2)Time bin 1 | (3)Time bin 0 | (4)Time bin 1 |
|---|---|---|---|---|
| Location where phase state from Port1 causes interference | ○ ▢ | ▢ ○ | One of two paths | One of two paths |
| Location where phase state from Port2 causes interference | ○ ▢ | ▢ ○ | ○○ ▢ | ▢ ○○ |
| Presence of errors | error | error | No error | No error |

# FIG. 8

Block sequence

▓ Quantum signal

◨ Test signal

# FIG. 9

**Transmitter(Alice)**

4. Detection of eavesdropping of initial quantum information based on QBER estimation

LD — ★ → IM → PM → VOA

Time to digital converter

Optical Delay1 — BS — SPD1, SPD2, SPD3

1:9 Coupler

Optical Delay — 1 X 2 OSW — Time state / Phase state

1 X N OSW

Time coding (combining time states before and after encoding)

Encoding

Calssical Message (Transmitted information)

5. Time phase sate selection & encoding

7. Transmission of random number to be used for QBER estimation and location information

Forward classical channel

Forward quantum channel

Backward quantum channel

Backward classical channel

**Receiver(Bob)**

2. Transmission of location of photon used for QBER estimation and information on location to transmitter

3. Transmission of information on location of generated time state to transmitter and storing of value of generated time state (stored as classic information)

1. Generation and transmission of initial quantum state

LD — ★ → IM → PM → BS → VOA → VOA

6. Detection of quantum state detection (detection of encoding information and QBER estimation)

SPD5, SPD6 — BS — Optical Delay2 — 1 X 2 OSW — SPD4

Comparison of time states before and after encoding and restoration of normal transmitted information

Decoding → Message

9. Restoration of message by comparison of time states

Time to digital converter

8. QBER estimation through comparison of quantum states of time state before and after encoding

# FIG. 10

Area used for transmission of quantum information

Optical switching time : 10ns

# FIG. 11

| Required quantity/protocol | One photon protocol | One photon protocol | Note |
|---|---|---|---|
| SPD | N + 1 | 3 | Measurement unit |
| Interferometer | N - 1 | 1 | |
| Single interferometer component | BS : 2<br><br>Mirror : 2 | BS : 1 | |
| LD | 1 | 2 | Signal generation unit |
| PM/IM | 1 / 1 | 2 / 2 | |
| Attenuator | 1 | 1 | |

In conventional technique, configuration complexity increases by approximately twice as dimension of transmitted information doubles.
(Main reason: detection complexity rapidly increases as dimension of transmitted information increases)

Proposed technique does not increase configuration complexity even when dimension of transmitted information increases (advantage)

# FIG. 12

# FIG. 13

# FIG. 14

Device(100, 200)

Communication unit (110)
(e.g., 5G communication unit)

Communication circuit (112)
(e.g., processor(s), memory(s))

Transceiver(s) (114)
(e.g., RF unit(s), antenna(s))

Control unit (120)
(e.g., processor(s))

Memory unit (130)
(e.g., RAM, storage)

Additional components (140)
(e.g., power unit/battery, I/O unit,
driving unit, computing unit)

# FIG. 15

| Vehicle or autonomous driving vehicle (100) |
|---|
| Communication unit (110) |
| Control unit (120) |
| Memory unit (130) |
| Driving unit (140a) |
| Power supply unit (140b) |
| Sensor unit (140c) |
| Autonomous driving unit (140d) |

108    208

| Device (100, 200) |
|---|
| Communication unit (210) |
| Control unit (220) |
| Memory unit (230) |
| Driving unit (140a) |
| Power supply unit (140b) |
| Sensor unit (140c) |
| Autonomous driving unit (140d) |

## INTERNATIONAL SEARCH REPORT

| International application No. |
|---|
| **PCT/KR2021/013351** |

**A. CLASSIFICATION OF SUBJECT MATTER**

**H04B 10/70**(2013.01)i; **H04B 10/079**(2013.01)i; **H04L 9/08**(2006.01)i

According to International Patent Classification (IPC) or to both national classification and IPC

**B. FIELDS SEARCHED**

Minimum documentation searched (classification system followed by classification symbols)

H04B 10/70(2013.01); G01J 3/457(2006.01); G01M 11/02(2006.01); H04L 9/08(2006.01); H04L 9/32(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 양자 통신(Quantum Communication), 양자 채널(Quantum channel), 블록 시퀀스 (block sequence), 단광자(single photon), 광분할기(BS, Beam Splitter), 검출 경로 개수(number of detection paths), 오류(error)

**C. DOCUMENTS CONSIDERED TO BE RELEVANT**

| Category* | Citation of document, with indication, where appropriate, of the relevant passages | Relevant to claim No. |
|---|---|---|
| X | KR 10-2018-0135780 A (KOREA INSTITUTE OF SCIENCE AND TECHNOLOGY) 21 December 2018 (2018-12-21)<br>See paragraphs [0032]-[0041], [0046]-[0048] and [0058]; claim 1; and figure 1. | 1-20 |
| A | JP 2006-242771 A (HOKKAIDO UNIV.) 14 September 2006 (2006-09-14)<br>See paragraphs [0044]-[0069]; and figure 1. | 1-20 |
| A | 김용수 등. 단일광자 생성, 검출 및 양자암호 통신 응용. Optical science and technology. vol. 18, no. 2, pp. 18-25, 2014, non-official translation (KIM, Yong-Su et al. Single Photon Generation and Detection and Quantum Cryptography Communication Applications.)<br>See sections 3-5. | 1-20 |
| A | 노태곤 등. 양자암호통신 기술. 전자통신동향분석. vol. 20, no. 5, serial no. 95, pp. 70-83, 2005 (NOH, Tae-Gon et al. Quantum Cryptography. Electronics and Telecommunications Trends.)<br>See section III. | 1-20 |

☑ Further documents are listed in the continuation of Box C.     ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **09 June 2022** | **10 June 2022** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

**INTERNATIONAL SEARCH REPORT**

| International application No. |
| --- |
| **PCT/KR2021/013351** |

**C.      DOCUMENTS CONSIDERED TO BE RELEVANT**

| Category* | Citation of document, with indication, where appropriate, of the relevant passages | Relevant to claim No. |
| --- | --- | --- |
| A | KR 10-2020-0042331 A (KOREA INSTITUTE OF SCIENCE AND TECHNOLOGY) 23 April 2020 (2020-04-23)<br>    See paragraph [0034]; and figure 2. | 1-20 |

Form PCT/ISA/210 (second sheet) (July 2019)

**INTERNATIONAL SEARCH REPORT**
Information on patent family members

International application No.

**PCT/KR2021/013351**

| Patent document cited in search report | | | Publication date (day/month/year) | Patent family member(s) | | | Publication date (day/month/year) |
|---|---|---|---|---|---|---|---|
| KR | 10-2018-0135780 | A | 21 December 2018 | KR | 10-2011039 | B1 | 14 August 2019 |
| | | | | KR | 10-2011044 | B1 | 14 August 2019 |
| | | | | KR | 10-2019-0071659 | A | 24 June 2019 |
| JP | 2006-242771 | A | 14 September 2006 | JP | 4701385 | B2 | 15 June 2011 |
| KR | 10-2020-0042331 | A | 23 April 2020 | KR | 10-2178846 | B1 | 13 November 2020 |

Form PCT/ISA/210 (patent family annex) (July 2019)